# EUROPEAN PATENT APPLICATION

(11) **EP 1 857 261 A1**
(43) Date of publication of application: **21.11.2007**
(21) Application number: 07252035.6
(22) Date of filing: 17.05.2007
(51) Int. Cl.: B29C 70/46, B29C 70/30, B29C 70/12, B29C 70/24

(54) **Method of increasing loft in a porous fiber reinforced thermoplastic sheet**

(30) Priority: 19.05.2006 US 437997
(71) Applicant: Azdel, Inc., Forest, VA 24551 (US)
(72) Inventor: Harper, Coray Avery, Forest, VA 24551 (US); Peterson, Charles William, 6922 LL Duiven (NL); Raghavendran, Venkatkrishna, Forest, VA 24551 (US)
(74) Representative: Crawford, Andrew Birkby

(57) **Abstract**

A method of fabricating a porous, fiber-reinforced thermoplastic sheet having increased lofting properties is provided. The method includes adding reinforcing fibers having an average length of about 5 mm to about 50 mm, and thermoplastic resin powder particles to an agitated aqueous foam to form a dispersed mixture, laying the dispersed mixture of reinforcing fibers and thermoplastic resin particles down onto a support structure, evacuating the water to form a web, generating a z-axis orientation of a portion of the reinforcing fibers, heating the web above the glass transition temperature of the thermoplastic resin, and pressing the web to a predetermined thickness to form a porous thermoplastic composite sheet having a void content of about 1 percent to about 95 percent.

## Description

### BACKGROUND OF THE INVENTION

This invention relates generally to porous fiber reinforced thermoplastic polymer sheets, and more particularly to porous fiber reinforced thermoplastic polymer sheets that have increased lofting properties over known porous fiber reinforced thermoplastic polymer sheets.

Porous fiber reinforced thermoplastic sheets have been described in U.S. Patent Nos. 4,978,489 and 4,670,331 and are used in numerous and varied applications in the product manufacturing industry because of the ease of molding the fiber reinforced thermoplastic sheets into articles. Known techniques, for example, thermo-stamping, compression molding, and thermoforming have been used to successfully form articles from fiber reinforced thermoplastic sheets.

In some industries, for example, the automotive industry, there is a need for products formed from porous fiber reinforced thermoplastic sheets that have a lower weight per unit area than known products. One way to accomplish this is to reduce the thickness of the porous fiber reinforced thermoplastic sheet. However, a reduction in thickness usually also produces a reduction in strength and stiffness of the product. Also, sometimes, there are specified thicknesses that are required.

### BRIEF DESCRIPTION OF THE INVENTION

In one aspect, a method of fabricating a porous, fiber-reinforced thermoplastic sheet having increased lofting properties is provided. The method includes adding reinforcing fibers having an average length of about 5 mm to about 50 mm, and thermoplastic resin powder particles to an agitated aqueous foam to form a dispersed mixture, laying the dispersed mixture of reinforcing fibers and thermoplastic resin particles down onto a support structure, evacuating the water to form a web, generating a z-axis orientation of a portion of the reinforcing fibers, heating the web above the glass transition temperature of the thermoplastic resin, and pressing the web to a predetermined thickness to form a porous thermoplastic composite sheet having a void content of about 1 percent to about 95 percent.

In another aspect, a porous, fiber-reinforced thermoplastic sheet having increased lofting properties is provided. The porous, fiber-reinforced thermoplastic sheet includes a plurality of reinforcing fibers bonded together with a thermoplastic resin. The reinforcing fibers have an average length of about 5 mm to about 50 mm, and at least about 5 weight percent of the reinforcing fibers are orientated in a z-axis orientation. The fiber-reinforced thermoplastic composite sheet has a void content of about 1 percent to about 95 percent.

### BRIEF DESCRIPTION OF THE DRAWINGS

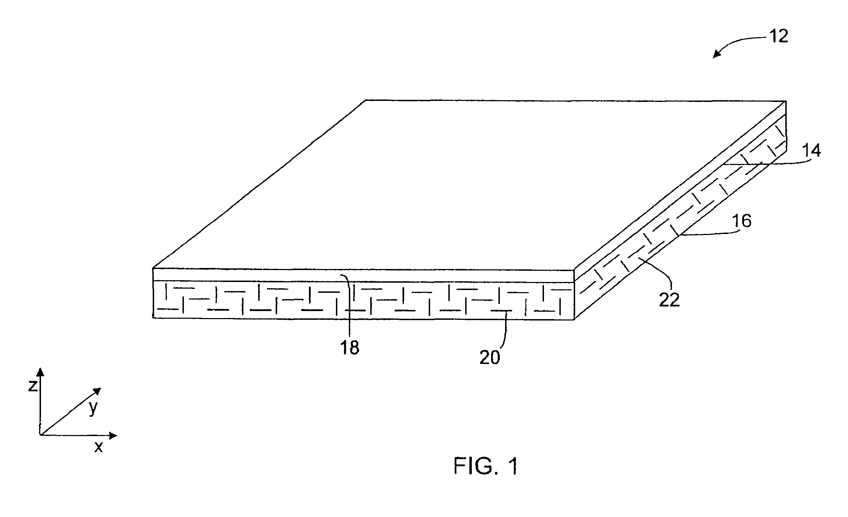

Figure 1 is sectional illustration of a composite plastic sheet in accordance with an embodiment of the present invention.

Figure 2 is a schematic illustration of a headbox with oscillating tines.

Figure 3 is a schematic illustration of a hydro-entanglement device.

### DETAILED DESCRIPTION OF THE INVENTION

A method of making a porous, fiber reinforced thermoplastic sheet having increased lofting properties is described below in detail. The method includes generating a z-axis orientation of a portion of the reinforcing fibers, at least about 5 percent by weight of the reinforcing fibers. The x-y plane encompasses the width and length of the sheet, while the z-axis direction encompasses the thickness of the sheet. Increasing the number of reinforcing fibers in the z- axis direction permits added loft, or expansion of the sheet, during forming to a greater thickness than known thermoplastic sheets with the same reinforcing fiber loading.

Referring to the drawing, Figure I is a cross sectional schematic illustration of an exemplary composite thermoplastic sheet 10 that includes a porous core 12 having a first surface 14 and a second surface 16. In some alternate embodiments, skins and/or barrier layers 18 are bonded to first surface 14 and/or second surface 16.

Core 12 is formed from a web made up of open cell structures formed by random crossing over of reinforcing fibers 20 held together, at least in part, by one or more thermoplastic resins 22, where the void content of porous core 12 ranges in general between about 5% and about 95% and in particular between about 30% and about 80% of the total volume of core 12. In another embodiment, porous core 12 is made up of open cell structures formed by random crossing over of reinforcing fibers 20 held together, at least in part, by one or more thermoplastic resins 22, where about 40% to about 100% of the cell structure are open and allow the flow of air and gases through. Core 12 has a density in one embodiment of about 0.1 gm/cc to about 1.8 gm/cc and in another embodiment about 0.3 gm/cc to about 1.0 gm/cc. Core 12 is formed using known manufacturing process, for example, a wet laid process, an air laid process, a dry blend process, a carding and needle process, and other known process that are employed for making non-woven products. Combinations of such manufacturing processes are also useful.

Core 12 includes about 20% to about 80% by weight of reinforcing fibers 20 having an average length of between about 5 mm and about 75 mm, and about 20% to about 80% by weight of a wholly or substantially unconsolidated fibrous or particulate thermoplastic materials, where the weight percentages are based on the total weight of core 12 In another embodiment, core 12 includes about 30% to about 55% by weight of reinforcing fibers 20. In another embodiment, core 12 includes reinforcing fibers 20 having an average length of between about 5 mm to about 50 mm, and in another embodiment between about 5 mm and about 25 mm. Suitable reinforcing fibers include, but are not limited to metal fibers, metalized inorganic fibers, metalized synthetic fibers, glass fibers, graphite fibers, carbon fibers, ceramic fibers, basalt fibers, inorganic fibers, aramid fibers, and mixtures thereof. Also, natural reinforcing fibers can be used, for example, kenaf fibers, jute fibers, flax fibers, hemp fibers, cellulosic fibers, sisal fibers, coir fibers, and mixtures thereof.

In the exemplary embodiment, reinforcing fibers 20 having an average length of about 5 mm to about 75 mm are added with thermoplastic powder particles, for example polypropylene powder, to an agitated aqueous foam which can contain a surfactant. The components are agitated for a sufficient time to form a dispersed mixture of the reinforcing fibers 20 and thermoplastic powder in the aqueous foam. The dispersed mixture is then laid down on any suitable support structure, for example, a wire mesh and then the water is evacuated through the wire mesh forming a web. To increase the lofting capability of core 12, a portion of reinforcing fibers 20 are orientated into a z-axis direction. What is meant by z-axis direction is that a reinforcing fiber 20 is orientated outside of the x-y-plane of core 12. The x-y plane encompasses the width and length of core 12, while the z-axis direction encompasses the thickness of core 12. The remainder of reinforcing fibers 20 are typically substantially parallel to the x-y plane of core 12.

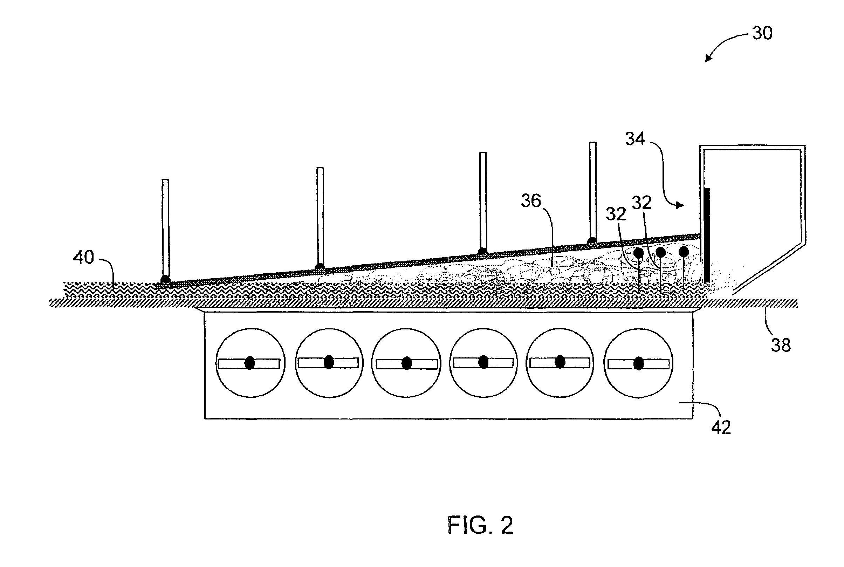

In one embodiment, mechanical action is used to orientate a portion of the reinforcing fibers in the z-axis direction. Any suitable mechanical action can be used, for example, tines oscillating back and forth parallel to the z-axis of core 12. Figure 2 is a sectional schematic illustration of an exemplary headbox 30 with oscillating tines 32. Headbox 30 includes a sluice 34 that directs an aqueous foam/slurry 36 of reinforcing fibers and thermoplastic powder particles to a support structure 38, for example, a fourdrinier wire, to form a web 40. A suction box 42 is used to remove water from slurry 36 to form web 40. Oscillating tines 32 generate a z-axis orientation of a portion of reinforcing fibers 20 to permit greater lofting of web 40.

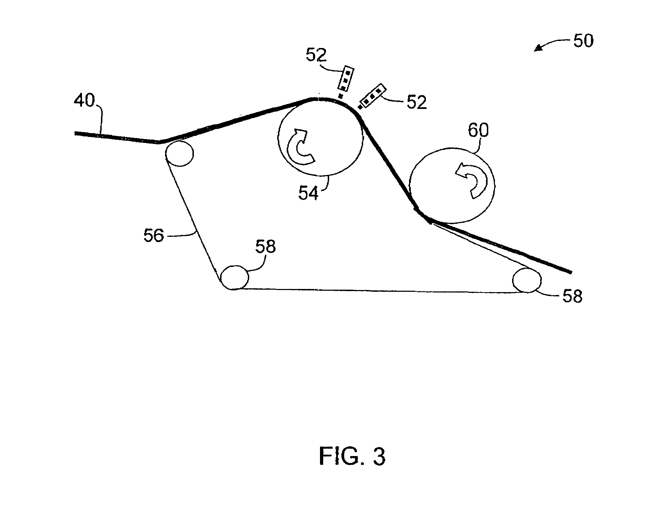

In another embodiment, a hydroentangler having a plurality of water jets in a predetermined pattern directed at the web is used to orientate the reinforcing fibers in the z-axis direction. With an increased number of reinforcing fibers in the z-axis direction rather than an x-axis direction or a y-axis direction, core 12 can loft, or expand, to a desired predetermined thickness. Any excess water from the hydro-entangling process is evacuated from the web. Figure 3 is a schematic illustration of an exemplary hydro-entanglement device 50. Hydro-entangling device 50 includes at least one water jet 52 (two shown) directed at web 40 to generate a z-axis orientation of a portion of the reinforcing fibers to permit greater lofting of web 40. A vacuum drum 54 removes the water directed at web 40 by water jets 52. A sieve belt 56 is positioned between web 40 and vacuum drum 54. Sieve belt 56 is driven by rollers 58. A drive roller 60 moves web 40 past vacuum drum 54. Hydro-entangling devices are commercially available from, for example, Fleissner GmbH, Egelsbach, Germany.

In another embodiment, a high consistency headbox is used to form the web which orientates a portion of the reinforcing fibers in the z-axis direction. High consistency headboxes are typically used in papermaking processes in conjunction with high consistency paper making stock. It has been found that high consistency headboxes that produce microturbulence in the dispersed mixture of the reinforcing fibers and thermoplastic powder in the aqueous foam can be used to generate z-axis orientation of a portion the reinforcing fibers. High consistency headboxes are commercially available from Metso Corporation, Helsinki, Finland.

The amount of z-axis orientated fibers depend on the composition of the composite, the desired loft, and the application of the composite. In one embodiment, the amount of z-axis direction fibers is at least about 5%, in another embodiment, about 20% to about 50%, and in another embodiment at least 50%, the percentages being weight percent.

The web is dried and heated above the softening temperature of the thermoplastic powder. The web is then cooled and pressed to a predetermined thickness to produce a composite sheet having a void content of between about 5 percent to about 95 percent.

The web is heated above the softening temperature of the thermoplastic resins 22 in core 12 to substantially soften the plastic materials and is passed through one or more consolidation devices, for example calendaring rolls, double belt laminators, indexing presses, multiple daylight presses, autoclaves, and other such devices used for lamination and consolidation of sheets and fabrics so that the plastic material can flow and wet out the fibers. The gap between the consolidating elements in the consolidation devices are set to a dimension less than that of the unconsolidated web and greater than that of the web if it were to be fully consolidated, thus allowing the web to expand and remain substantially permeable after passing through the rollers. In one embodiment, the gap is set to a dimension about 5% to about 10% greater than that of the web if it were to be fully consolidated. A fully consolidated web means a web that is fully compressed and substantially void free. A fully consolidated web would have less than 5% void content and have negligible open cell structure. In alternate embodiments, the web can be manufactured in unconsolidated rolls or unconsolidated slitted sheets. The unconsolidated web or sheets are then reheated and consolidated at a latter time and/or location using conventional IR dryers, conventional dryers, calendar rolls, batch press, double laminators, and the like.

Particulate plastic materials can include short plastics fibers which can be included to enhance the cohesion of the web structure during manufacture. Bonding is affected by utilizing the thermal characteristics of the plastic materials within the web structure. The web structure is heated sufficiently to cause the thermoplastic component to fuse at its surfaces to adjacent particles and fibers.

In one embodiment, individual reinforcing fibers 20 should not on the average be shorter than about 5 millimeters, because shorter fibers do not generally provide adequate reinforcement in the ultimate molded article. Also, fibers should not on average be longer than about 50 millimeters since such fibers are difficult to handle in the manufacturing process.

In one embodiment, in order to confer structural strength, reinforcing fibers 20 have an average diameter between about 7 and about 22 microns. Fibers of diameter less than about 7 microns can easily become airborne and can cause environmental health and safety issues. Fibers of diameter greater than about 22 microns are difficult to handle in manufacturing processes and do not efficiently reinforce the plastics matrix after molding.

In one embodiment, the thermoplastics material 22 is, at least in part, in a particulate form. Suitable thermoplastics include, but are not limited to, polyolefins, including polymethylene, polyethylene, and polypropylene, polystyrene, acrylonitrylstyrene, butadiene, polyesters, including polyethyleneterephthalate, polybutyleneterephthalate, and polypropyleneterephthalate, polybutyleneterachlorate, and polyvinyl chloride, both plasticized and unplasticized, acrylics, including polymethyl methacrylate, and blends of these materials with each other or other polymeric materials. Other suitable thermoplastics include, but are not limited to, polyarylene ethers, acrylonitrile-butylacrylate-styrene polymers, amorphous nylon, as well as alloys and blends of these materials with each other or other polymeric materials. It is anticipated that any thermoplastics resin can be used which is not chemically attacked by water and which can be sufficiently softened by heat to permit fusing and/or molding without being chemically or thermally decomposed.

The thermoplastic particles need not be excessively fine, but particles coarser than about 1.5 millimeters are unsatisfactory in that they do not flow sufficiently during the molding process to produce a homogenous structure. The use of larger particles can result in a reduction in the flexural modulus of the material when consolidated.

While the invention has been described in terms of various specific embodiments, those skilled in the art will recognize that the invention can be practiced with modification within the spirit and scope of the claims.

## Claims

1. A method of fabricating a porous, fiber-reinforced thermoplastic sheet having increased lofting properties, said method comprising:
adding reinforcing fibers having an average length of about 5 mm to about 75 mm, and thermoplastic resin powder particles to an agitated aqueous foam to form a dispersed mixture;
laying the dispersed mixture of reinforcing fibers and thermoplastic resin particles down onto a support structure;
evacuating the water to form a web;
generating a z-axis orientation of a portion of the reinforcing fibers;
heating the web above the glass transition temperature of the thermoplastic resin; and
pressing the web to a predetermined thickness to form a porous thermoplastic composite sheet having a void content of about 1 percent to about 95 percent.

2. A method in accordance with Claim 1 wherein the reinforcing fibers comprise at least one of metal fibers, metalized inorganic fibers, metalized synthetic fibers, glass fibers, graphite fibers, carbon fibers, ceramic fibers, basalt fibers, inorganic fibers, aramid fibers, kenaf fibers, jute fibers, flax fibers, hemp fibers, cellulosic fibers, sisal fibers, and coir fibers.

3. A method in accordance with Claim 1 wherein the thermoplastic resin comprises at least one of polyolefins, polystyrene, acrylonitrylstyrene, butadiene, polyesters, polybutyleneterachlorate, polyvinyl chloride, polyphenylene ether, polycarbonates, polyestercarbonates, acrylonitrile-butylacrylate-styrene polymers, and amorphous nylon.

4. A method in accordance with Claim 1 wherein the porous thermoplastic sheet comprises from about 20 to about 80 percent by weight of the reinforcing fibers and from about 20 to about 80 percent by weight of the thermoplastic resin.

5. A method in accordance with Claim 1 wherein the porous thermoplastic sheet comprises from about 35 to about 55 percent by weight of the reinforcing fibers and from about 45 to about 65 percent by weight of the thermoplastic resin.

6. A method in accordance with Claim 1 further comprising adhering a skin to at least a portion of a surface of the porous thermoplastic sheet.

7. A method in accordance with Claim 6 wherein the skin comprises at least one of a thermoplastic film, an elastomeric film, a metal foil, a thermosetting coating, an inorganic coating, a fiber based scrim, a non-woven fabric, and a woven fabric.

8. A method in accordance with Claim 1 wherein generating a z-axis orientation comprises:
impinging the web with a plurality of water jets arranged in a predetermined pattern; and
evacuating any excess water from the web.

9. A method in accordance with Claim 1 wherein generating a z-axis orientation comprises pulling a portion of the reinforcing fibers into a z-axis orientation with a plurality of tines oscillating in the z-axis.

10. A method in accordance with Claim 1 wherein generating a z-axis orientation comprises utilizing a high consistency head box during the formation of the web.

11. A method in accordance with Claim 1 wherein generating a z-axis orientation comprises generating at least about 5 weight percent of the fibers in the z-axis orientation.

12. A method in accordance with Claim 1 wherein generating a z-axis orientation comprises generating about 20 to about 50 weight percent of the fibers in the z-axis orientation.

13. A method in accordance with Claim 1 wherein generating a z-axis orientation comprises generating at least about 50 weight percent of the fibers in the z-axis orientation.

14. A porous, fiber-reinforced thermoplastic sheet having increased lofting properties comprising:
a plurality of reinforcing fibers bonded together with a thermoplastic resin;
said reinforcing fibers having an average length of about 5 mm to about 75 mm, at least about 5 weight percent of said reinforcing fibers orientated in a z-axis orientation;
said fiber-reinforced thermoplastic composite sheet having a void content of about 1 percent to about 95 percent.

15. A porous, fiber-reinforced thermoplastic sheet in accordance with Claim 14 comprising about 20 to about 50 weight percent of said reinforcing fibers in the z-axis orientation.

16. A porous, fiber-reinforced thermoplastic sheet in accordance with Claim 14 comprising at least about 50 weight percent of said reinforcing fibers in the z-axis orientation.

17. A porous, fiber-reinforced thermoplastic sheet in accordance with Claim 14 wherein said reinforcing fibers comprise at least one of metal fibers, metalized inorganic fibers, metalized synthetic fibers, glass fibers, graphite fibers, carbon fibers, ceramic fibers, basalt fibers, inorganic fibers, aramid fibers, kenaf fibers, jute fibers, flax fibers, hemp fibers, cellulosic fibers, sisal fibers, and coir fibers.

18. A porous, fiber-reinforced thermoplastic sheet in accordance with Claim 14 wherein said thermoplastic resin comprises at least one of polyolefins, polystyrene, acrylonitrylstyrene, butadiene, polyesters, polybutyleneterachlorate, polyvinyl chloride, polyphenylene ether, polycarbonates, polyestercarbonates, acrylonitrile-butylacrylate-styrene polymers, and amorphous nylon.

19. A porous, fiber-reinforced thermoplastic sheet in accordance with Claim 14 wherein said thermoplastic sheet comprises from about 20 to about 80 percent by weight of said reinforcing fibers and from about 20 to about 80 percent by weight of said thermoplastic resin.

20. A porous, fiber-reinforced thermoplastic sheet in accordance with Claim 14 wherein said thermoplastic sheet comprises from about 35 to about 55 percent by weight of said reinforcing fibers and from about 45 to about 65 percent by weight of said thermoplastic resin.
